# EUROPÄISCHE PATENTSCHRIFT

(11) **EP 2 260 699 B1**
(45) Veröffentlichungstag und Bekanntmachung des Hinweises auf die Patenterteilung: **30.03.2016**
(21) Anmeldenummer: 10165498.6
(22) Anmeldetag: 10.06.2010
(51) Int. Cl.: A01K 11/00, A01K 29/00, A61D 17/00

(54) **Optisch gestützte Nutztierortungsvorrichtung**
Optically supported livestock location device
Dispositif d'orientation d'animaux d'élevage doté d'une assistance optique

(30) Priorität: 10.06.2009 DE 202009008268 U
(43) Veröffentlichungstag der Anmeldung: 15.12.2010
(60) Teilanmeldung: 14163771.0
(73) Patentinhaber: Big Dutchman Pig Equipment GmbH, 49377 Vechta (DE)
(72) Erfinder: Holling, Daniel, 49626, Berge (DE); Müller, Dr., Henning, 49377, Vechta (DE); Kruse, Klaus, 49565, Bramsche (DE)
(74) Vertreter: Eisenführ Speiser

(56) Entgegenhaltungen:
- EP-A1- 1 212 939
- EP-A1- 1 900 278
- EP-A1- 2 168 430
- WO-A1-2005/034618
- WO-A1-2008/156416
- WO-A1-2009/135493
- FR-A1- 2 666 734
- FR-A1- 2 759 541

## Beschreibung

Die Erfindung betrifft eine Vorrichtung zur Tierortung und-Identifikation, insbesondere zur Identifikation und Ortung von Nutztieren. Ein weiterer Aspekt der Erfindung ist ein Verfahren zur Tierortung und -identifikation.

Vorrichtungen und Verfahren zur Tierortung werden insbesondere in der modernen Nutztierhaltung eingesetzt, um aus einer größeren Menge von Nutztieren ein bestimmtes Nutztier zu identifizieren, beispielsweise um dieses nach erfolgter Identifikation einer tiermedizinischen Untersuchung oder Behandlung zu unterziehen, eine besondere Futtergabe zu verabreichen, es einem anderen Aufenthaltsbereich zuzuführen oder dgl. Unter einem Tierortungsvorgang soll hierbei ein Vorgang verstanden werden, bei dem in reproduzierbarer Weise aus einer Mehrzahl von Tieren, die im Wesentlichen gleiche Körpergrößen, Farbgebungen und sonstige Körpermerkmale aufweisen können, ein einzelnes, bestimmtes Tier herausgefunden wird. Im Zuge einer solchen Tierortung ist es insbesondere erforderlich, das richtige Tier zu finden.

Es ist grundsätzlich bekannt, Nutztiere mittels einer individuellen Kodierung, die beispielsweise eintätowlert, eingebrannt, in sonstiger Weise auf die Haut des Tieres aufgebracht wird oder die in Form eines am Tier befestigten Bandes, Ringes mit eingeprägter oder aufgedruckter Kodierung, wie beispielsweise einem bei Vögeln eingesetzten Fußring, oder mittels eines mithilfe eines separaten Lesegerätes lesbaren Kodierungsträgers, wie beispielsweise einem RFID-Tag, der dem Tier unter die Haut implantiert, als "Knopf im Ohr" oder in anderer Weise befestigt wird, zu charakterisieren. Auf diese Weise kann jedem Tier ein individuelles und für den Nutztierhalter in sicherer Weise zu unterscheidendes Charakterisierungsmerkmal gegeben werden, anhand dessen das Tier in eindeutiger Weise identifizierbar ist. Allerdings steht dieser Vorgehensweise bei der TierOrtung eine Reihe von Nachteilen gegenüber. So ist die jeweils erforderliche individuelle Anbringung des charakterisierenden Merkmals an jedes Nutztier ein aufwändiger Vorgang und insbesondere die kostengünstigen Charakterisierungsmerkmale können durch Verschmutzung unlesbar werden, was die TierOrtung verhindern kann. Zudem kann durch Verlust des charakterisierenden Merkmals ein Tier nicht mehr identifizierbar sein, was diese Vorgehensweise bei der TierOrtung insbesondere bei einer großen Anzahl von Tieren, die gemeinsam gehalten werden, und den dabei auftretenden mechanischen Belastungen auf die am Tier befestigten charakterisierenden Merkmale unsicher macht.

Schließlich ist ein weiterer entscheidender Nachteil dieser vorbekannten TierOrtungsverfahren, dass es zum Auffinden eines bestimmten Tieres in einer Gruppe von mehreren Tieren notwendig werden kann, dass mehrere oder im ungünstigsten Falle alle Tiere zunächst identifiziert werden müssen, bevor auf der so durchgeführten Suche das letztlich gesuchte individuelle einzelne Tier aufgefunden wird. Dies macht die TierOrtung für den Nutztierhalter zeitlich aufwändig und erfordert häufig eine mit der TierOrtung einhergehende Sortierung der Tiere, um MehrfachOrtungen ein und desselben Tieres oder das versehentliche Übersehen und Auslassen eines einzelnen Tieres im Zuge der Suche zu verhindern.

Aus DE 10 2006 048 321 A1 ist es bekannt, Tiere anhand von einzelnen, mittels einer Bilderfassung erkannten Körpermerkmalen zu Identifizieren. Zwar kann mit einem solchen Ortungsverfahren vermieden werden, dass die Tiere noch mit einem individuellen Charakterisierungsmerkmal versehen werden müssen, jedoch hat sich das Verfahren als nicht ausreichend zuverlässig in der Differenzierung einer größeren Anzahl von Tieren erwiesen, wenn mit einer für Verarbeitungszwecke zumutbaren Datenmenge bei der Bilderfassung gearbeitet wird bzw. das Verfahren erfordert die Verarbeitung sehr hoher Datenmengen, wenn eine höhere Sicherheit bei der TierOrtung erzielt werden soll. Jedoch wird auch dann nicht eine zweifelsfreie TierOrtung in größeren Nutztierhaltungen erreicht. Das Verfahren der TierOrtung anhand einer Bilderfassung eignet sich darüber hinaus auch nur zur Ortung eines einzelnen Tieres, so dass auch hier zum Auffinden eines bestimmten individuellen Tieres aus einer Mehrzahl von Tieren es erforderlich wird, mehrere, im ungünstigsten Falle alle Tiere zu identifizieren, bis das einzelne, individuell gesuchte Tier identifiziert und somit gefunden wird. Da der Bilderfassungsvorgang in einer vorbestimmten Ausrichtung des Tieres zur Bilderfassungsvorrichtung erfolgen muss, um eine sichere Erfassung der differenzierenden Merkmale zu gewährleisten, ist die einzelne TierOrtung bei diesem Vorgehen zeitlich aufwändiger als bei anderen, vorbekannten Verfahren, so dass die insgesamt erforderliche Zeit zum Auffinden eines einzelnen, individuellen Tieres aus einer Mehrzahl von Tieren noch größer ist als bei den vorbekannten Verfahren.

Aus EP 1212939 A1 ist ein Tierüberwachungssystem bekannt, bei dem jedem Tier ein Tieridentifikationscode zugewiesen wird und die Tiere durch eine Bildüberwachung verfolgt werden. Das System weist weiterhin Merkmale auf, die eine Fehlzuordnung des Identifikationscodes zu einem Tier vermeiden oder korrigieren kann. Hierzu ist vorgesehen, dass die Bildverfolgung der Tiere durch zwei Kameras mit unterschiedlichen Blickwinkel auf einen Überwachungsbereich erfolgt. Weiterhin ist vorgesehen, dass bereits identifizierte Tiere dann, wenn sie an einer Identifikationseinrichtung vorbeilaufen, auf ihre korrekte Identifizierung überprüft werden und diese gegebenenfalls korrigiert wird. Schließlich ist weiter vorgesehen, dass mehrere Tieridentifikationseinrichtungen vorgesehen sind.

Aufgabe der Erfindung ist es daher, eine Vorrichtung und ein Verfahren zur TierOrtung bereitzustellen, welche(s) es ermöglicht, ein Tier innerhalb einer kürzeren Zeit als im Stand der Technik aus einer Mehrzahl von gemeinsam gehaltenen Tieren herauszufinden.

Diese Aufgabe wird erfindungsgemäß gelöst durch eine Tierortungsvorrichtung nach Anspruch 1.

Mit der erfindungsgemäßen Tierortungsvorrichtung wird es möglich, ein einzelnes Tier aus einer Mehrzahl von Tieren auf direktem Wege herauszufinden, ohne hierbei zuvor mehrere der anderen Tiere identifizieren zu müssen. Erfindungsgemäß wird hierzu eine Bilderfassungseinrichtung verwendet, die beispielsweise als digitale Kamera, insbesondere digitale Videokamera, ausgebildet sein kann und die solcherart angeordnet und ausgebildet ist, dass sie mit ihrem Bildbereich einen Tieraufenthaltsbereich, wie beispielsweise eine Box, einen Stall, eine Bucht oder dgl., erfassen kann, in dem sich eine Mehrzahl von Tieren aufhält. Mit der Bilderfassungseinrichtung wird dieser Tieraufenthaltsbereich mit aufeinander folgenden Bildern solcherart erfasst, dass eine Bildsequenz entsteht, deren Bildfrequenz eine Verfolgung jedes einzelnen Tieres in seiner Bewegung innerhalb des Tieraufenthaltsberelchs ermöglicht. Die Bilderfassungseinrichtung kann mit Tageslicht arbeiten oder sie kann im Infrarotbereich arbeiten oder mit Falschfarben, wobei zu verstehen ist, dass der Bilderfassungseinrichtung zur zuverlässigen Erfassung der Tiere auch eine Beleuchtungsquelle mit entsprechender Wellenlänge zugeordnet sein kann.

Erfindungsgemäß ist weiterhin eine Merkmalserfassungsvorrichtung vorhanden, die dazu dient, um ein tierindividuelles Merkmal zu erfassen. Die Merkmalserfassungsvorrichtung kann vorzugsweise im Tieraufenthaltsbereich angeordnet sein, um einen Erfassungsvorgang des Merkmals in unmittelbarem Kontakt oder unmittelbarer Nähe zu den jeweiligen Tieren durchzuführen. Die Merkmalserfassungsvorrichtung kann beispielsweise als Lesegerät für ein Ortungs-Tag, welches dem Tier implantiert oder an dem Tier befestigt ist, ausgeführt sein. Der Merkmalserfassungsvorgang muss für die Zwecke der erfindungsgemäßen TierOrtung lediglich einmalig erfolgen, da, wie im Weiteren beschrieben wird, nach der Merkmalserfassung das solcherart erfasste Tier mithilfe der Bilderfassungseinrichtung verfolgt wird und so jederzeit wieder zugeordnet und identifiziert werden kann. Aufgrund dieser Funktionsweise der erfindungsgemäßen Tierortungsvorrichtung kann die Merkmalserfassungsvorrichtung beispielsweise als manuell bedienbares Handgerät ausgebildet sein, welches ein Benutzer der Vorrichtung bedient, indem er es neben oder über ein bezüglich des Merkmals zu erfassendes Tier hält, einen als Merkmal dienenden tierindividuellen Code, wie beispielsweise eine Zahlen- und/oder Buchstabenkombination eingibt oder einliest und das Merkmal durch die Anordnung des Handgeräts neben bzw. oberhalb des Tieres diesem Tier zuweist.

Erfindungsgemäß sind die Merkmalserfassungsvorrichtung und die Bilderfassungseinrichtung signaltechnisch mit einer Datenverarbeitungseinrichtung verbunden. Diese Datenverarbeitungseinrichtung erhält somit einerseits von der Merkmalserfassungsvorrichtung ein tierindividuelles Merkmal und andererseits von der Bilderfassungseinrichtung die Bilddaten eines Tieres, welches sich zum Zeitpunkt der Merkmalserfassung im Bereich der Merkmalserfassungsvorrichtung aufhält. Für die Funktion der Erfindung vorteilhaft ist es in diesem Zusammenhang, wenn die Datenverarbeitungseinrichtung ausgebildet ist, um die Merkmalserfassungsvorrichtung durch Bildverarbeitung in dem aufgenommenen Bild zu erkennen, in einfacheren Ausgestaltungen kann die Lage der Merkmalserfassungsvorrichtung jedoch auch innerhalb des Tieraufenthaltsbereichs fixiert und diese fixierte Lage entsprechend einprogrammiert sein, um auf diese Weise die Zuordnung des jeweiligen Tieres zu den jeweils erfassten Merkmalen in sicherer Weise vornehmen zu können.

Die Datenverarbeitungseinrichtung ist dann weiterhin dazu ausgebildet, um jedes einzelne Tier innerhalb des Tieraufenthaltsbereichs in seiner Bewegung solcherart zu verfolgen, dass die Lage jedes einzelnen Tieres auch nach Bewegungen der Tiere noch jeweils einzeln eindeutig bestimmbar ist. Auf diese Weise können Tiere, denen ein individuelles Merkmal mithilfe der Merkmalserfassungsvorrichtung zugewiesen wurden, in ihrer hierauf folgenden Bewegung innerhalb des Tieraufenthaltsbereichs verfolgt werden und somit das tierindividuelle Merkmal dem Tier auch dann noch zugeordnet werden, wenn es sich von der Merkmalserfassungsvorrichtung wegbewegt hat. Über eine gewisse Zeitspanne wird daher erfahrungsgemäß jedes Tier einmal an der Merkmalserfassungsvorrichtung vorbeigehen und hierdurch hinsichtlich seines Merkmals erfasst, so dass dann jedem Tier ein tierindividuelles Merkmal zugeordnet Ist und da jedes Tier mithilfe der Bilderfassungseinrichtung und der Datenverarbeitungseinrichtung in seiner Bewegung nach der Merkmalserfassung verfolgt wird, kann zu jedem Zeitpunkt jedes Tier eindeutig hinsichtlich seiner Position im Tieraufenthaltsbereich bestimmt werden. Insbesondere kann eine solche vollständige Erfassung einer Tiermenge in kurzer Zeit erfolgen, wenn die Merkmalserfassungsvorrichtung beispielsweise im Bereich der Tränke oder der Fressstelle der Tiere angeordnet ist.

Schließlich ist erfindungsgemäß eine Anzeigevorrichtung vorgesehen, welche es ermöglicht, einem Benutzer den Aufenthaltsort eines oder mehrerer Tiere innerhalb des Tieraufenthaltsbereichs anzuzeigen. Diese Anzeigevorrichtung kann beispielsweise als Display ausgebildet sein und kann die identifizierten Tiere bzw. das identifizierte Tier beispielsweise als Umriss mit einer dem Umriss zugeordneten individuellen Kodierung anzeigen. Eine andere Ausgestaltung der Anzeigevorrichtung kann beispielsweise so ausgeführt sein, dass ein Benutzer das tierindividuelle Merkmal, beispielsweise einen Zahlen/Buchstabencode, über eine Benutzerschnittstelle eingibt und daraufhin das diesem individuellen Merkmal entsprechende Tier auf einem Display als farbig hervorgehobener Umriss gegenüber den anderen Umrissen angezeigt wird. Mit der erfindungsgemäßen Tierortungsvorrichtung wird es somit möglich, aus einer Mehrzahl von Tieren innerhalb eines Tieraufenthaltsbereichs, in dem sich diese Tiere untereinander frei bewegen können, zu jedem Zeitpunkt ein bestimmtes gesuchtes Tier herauszufinden, indem man sich dessen Aufenthaltsort innerhalb des Tieraufenthaltsbereichs anzeigen lässt oder ihn entsprechend abliest und dieses solcherart identifizierte und aufgefundene Tier dann gezielt einer Behandlung, Untersuchung oder dgl. zuführen kann.

Gemäß einer ersten bevorzugten Ausführungsform wird die erfindungsgemäße Tlerortungsvorrichtung weitergebildet, indem die Bilderfassungseinrichtung eine Videokamera ist und die Datenverarbeitungseinrichtung solcherart ausgebildet ist, dass die Videokamera in regelmäßigen Zeitabständen für eine Bilderfassung des Tieraufenthaltsbereichs angesteuert wird, insbesondere in Zeitabständen, die abhängig von der Bewegungsgeschwindigkeit der zu identifizierenden Nutztiere solcherart gewählt sind, dass die erfassten Bilder eines sich schnell bewegenden Nutztieres in zwei aufeinander folgenden Bilderfassungen aufgrund ihrer eng benachbarten Lage zueinander ein und demselben Nutztier zugeordnet werden können. Je nachdem, ob es sich bei den zu identifizierenden und folglich auch in ihrer Bewegung zu verfolgenden Tieren um Tiere mit einer trägen Bewegungsart oder einer raschen Bewegungsart handelt, kann gemäß dieser Ausbildungsform der Erfindung eine jeweils angepasste Bildfolgefrequenz vorgesehen sein, um einerseits die sichere Verfolgung der sich bewegenden Tiere zu gewährleisten und andererseits die Menge der zu verarbeitenden Daten so gering wie möglich zu halten. Diese Ausgestaltung ist insbesondere dann vorteilhaft, wenn mehrere Tieraufenthaltsbereiche mit mehreren Bilderfassungseinrichtungen und Merkmalserfassungsvorrichtungen überwacht werden, die solcherart produzierten Daten jedoch von einer zentralen Datenverarbeitungseinrichtung verarbeitet werden, um auf diese Weise die Datenverarbeitungseinrichtung mit einer in Echtzeit zu verarbeitenden Datenmenge zu versorgen. Die Bildfolgefrequenz bzw. der Zeitabstand zwischen zwei aufeinander folgenden Bildern der Bilderfassungseinrichtung kann hierbei zwischen Bruchteilen von Sekunden, beispielsweise 0,1 oder 0,5 s, bis hin zu mehreren Sekunden, beispielsweise 1 oder 5 s liegen.

Gemäß einer weiteren bevorzugten Ausführungsform ist vorgesehen, dass das tierindividuelle Merkmal eine am Tier befestigte Kodierung, insbesondere ein RFID-Tag, ist und die Merkmalserfassungsvorrichtung ein Lesegerät zum Auslesen der am Tier befestigten Kodierung ist. Mit dieser Fortbildung wird eine sichere und automatisierbare Merkmalserfassung am Tier ermöglicht, beispielsweise indem das als Merkmalserfassungsvorrichtung dienende Lesegerät im Bereich einer Fressstelle angeordnet ist und auf diese Weise einerseits das Merkmal eines fressenden Tieres sicher erfasst werden kann und andererseits das Tier in seiner Lage am Fressstand von der Bilderfassungseinrichtung und der hiermit signaltechnisch verbundenen Datenverarbeitungseinrichtung eindeutig erfasst und hierauf folgend verfolgt werden kann.

Insbesondere ist es gemäß einer weiteren bevorzugten Ausführungsform bevorzugt, dass die Bilderfassungsvorrichtung oberhalb des Tieraufenthaltsbereichs angeordnet ist und für eine nach unten gerichtete Bilderfassungsrichtung ausgerichtet ist und/oder dass die Merkmalserfassungsvorrichtung im Tieraufenthaltsbereich angeordnet ist, vorzugsweise innerhalb eines Futterstandes im Tieraufenthaltsbereich. Diese Art der Anordnung der Bilderfassungseinrichtung und der Merkmalserfassungsvorrichtung hat sich für eine sichere TierOrtung als besonders vorteilhaft erwiesen. Allerdings ist zu verstehen, dass je nach der lokalen Situation innerhalb eines Stalls und je nach Art der Bilderfassungseinrichtung und der Merkmalserfassungsvorrichtung auch andere Ausgestaltungen vorteilhaft sein können, beispielsweise schräge Aufnahmerichtungen der Bilderfassungseinrichtung oder als Handgerät ausgeführte mobile Merkmalserfassungsvorrichtungen.

Noch weiter ist es insbesondere bevorzugt, dass die Datenverarbeitungseinrichtung ausgebildet ist, um den Umriss eines von der Bilderfassungseinrichtung erfassten Tieres zu bestimmen, in aufeinander folgenden Bilderfassungen zu verfolgen und einem tierindividuellen Merkmal zuzuordnen. Neben Möglichkeiten der Tierverfolgung anhand eines Farbflächenverlaufs, mit dem sich das Tier in der Bilderfassungseinrichtung abbildet, hat sich insbesondere die Ermittlung des Umrisses eines Tieres durch entsprechende Bilddatenverarbeitung als zuverlässige und eindeutige Möglichkeit erwiesen, um ein Tier sicher von anderen Gegenständen innerhalb eines Tieraufenthaltsbereichs zu unterscheiden. Der Umriss eines Tieres lässt darüber hinaus in vielen Anwendungsfällen eine Bestimmung der Ausrichtung des Tieres, d.h. die Lage des Kopfes des Tieres, zu, so dass hieraus eine bevorzugte Bewegungsrichtung des Tieres bestimmbar wird und In der Datenverarbeitungseinrichtung bei der Verfolgung des Umrisses berücksichtigt werden kann. Diese Maßnahme oder auch andere Maßnahmen können somit durch Berücksichtigung logischer Umstände die Verfolgung der Tiere sicherer machen und somit Fehler bei der Tierverfolgung vermeiden helfen.

Gemäß einer weiteren bevorzugten Ausführungsform ist vorgesehen, dass die Datenverarbeitungseinrichtung ausgebildet ist, um anhand der Verfolgung der Umrisse eines oder mehrerer Tiere einem oder entsprechend mehreren Tieren tierindividuelle Verhaltensmuster zuzuordnen, insbesondere einen Fressvorgang eines Tieres, Kannibalismus unter den Tieren oder ein krankheitstypisches Verhalten. Diese Fortbildung der Erfindung beruht auf der Erkenntnis, dass mit der erfindungsgemäßen Vorrichtung neben der eindeutigen TierOrtung auch weitere vorteilhafte Funktionen im Rahmen der Tierhaltung durchgeführt werden können. So kann mit dieser Ausgestaltung aufgrund der laufenden Verfolgung der Bewegung aller Tiere innerhalb des Tieraufenthaltsbereichs festgestellt werden, ob jedes der Tiere sich innerhalb eines bestimmten Zeitraums zumindest einmal am Fressstand befunden hat, woraus geschlossen werden kann, dass dieses Tier Nahrung aufgenommen hat. Tiere, die auffällig selten am Fressstand sind, können mithilfe der erfindungsgemäßen Vorrichtung erfasst werden und gegebenenfalls automatisch als in dieser bestimmten Weise auffällig markiert und auf der Anzeigevorrichtung angezeigt werden. Des Weiteren ist mit der erfindungsgemäßen Vorrichtung das Verhalten der Tiere untereinander verfolgbar. So können Auffälligkeiten, beispielsweise Tiere, die auffällig häufig sich anderen Tieren In direktem Kontakt nähern und somit möglicherweise Kannibalismus zeigen oder aber für Verletzungen sorgen, ebenfalls erfasst, gegebenenfalls markiert und entsprechend angezeigt werden. Die erfindungsgemäße Vorrichtung leistet daher über die vereinfachte TierOrtung hinaus auch Kontrollfunktionen, die in direkter Weise mit der Anzeigevorrichtung dem Benutzer der Vorrichtung angezeigt werden können, oder aber auch an eine zentrale Stallüberwachungseinrichtung weitergeleitet werden können, um dort Auffälligkeiten umgehend anzuzeigen. Eine weitere Anwendung dieser Überwachungsfunktion kann beispielsweise darin bestehen, sich auffällig wenig oder gar nicht bewegende Tiere zu erfassen, da diese möglicherweise erkrankt oder verendet sind oder aber in Aufzuchtställen das Hinzukommen neuer Tiere durch Geburt zu erfassen und entsprechend zu melden, indem eine Zählung der innerhalb des Tieraufenthaltsbereichs auftretenden und sich bewegenden Tierumrisse erfolgt und bei Änderung der Anzahl der sich bewegenden Umrisse auf einen entsprechenden Geburtsvorgang rückgeschlossen wird.

Gemäß einer weiteren bevorzugten Ausführungsform ist die Anzeigevorrichtung ausgebildet, um die Tiere als Symbole innerhalb eines symbolisierten Tieraufenthaltsbereichs anzuzeigen und das oder die Symbol(e) derjenigen Tiere, denen ein bestimmtes tierindividuelles Verhaltensmuster zugeordnet wurde, zu markleren. Bei dieser Ausgestaltung wird auf der Anzeigevorrichtung, beispielsweise auf einem Bildschirm der Anzeigevorrichtung, eine Übersicht über den Tieraufenthaltsbereich gegeben, in dem die Tiere als Symbole, welche beispielsweise als Umriss des Tieres oder als Rassensymbol ausgeführt sein können, an ihrem jeweiligen Aufenthaltsort angezeigt. Dies ermöglicht es einem Benutzer, ein bestimmtes Tier aus der Menge von Tieren in einfacher und schneller Weise anhand der Anzeigevorrichtung herauszufinden. Insbesondere ist bei dieser Ausgestaltung es möglich, dass solche Tiere, die ein bestimmtes, tierindividuelles Verhaltensmuster gezeigt haben und denen dieses Verhaltensmuster daher durch die Tierortungsvorrichtung zugeordnet wurde oder denen dieses Verhaltensmuster vom Benutzer manuell zugeordnet wurde, markiert werden, beispielsweise indem das Symbol in einer dem jeweiligen Verhaltensmuster zugeordneten Farbe dargestellt wird oder das Verhaltensmuster In einem Kürzel oder in Klartext dem Symbol beigefügt wird.

Bei einer weiteren bevorzugten Ausführungsform wird die erfindungsgemäße Tierortungsvorrichtung fortgebildet durch eine Datenschnittstelle, und dadurch dass die Datenverarbeitungselnrichtung ausgebildet ist, um über die Datenschnittstelle ein Signal an eine Sortervorrichtung auszugeben, welches dazu dient, ein Tier, welches sich im Bereich der Sortereinrichtung befindet und dem zuvor ein bestimmtes tierindividuelles Verhaltensmuster zugeordnet wurde, aus dem Tieraufenthaltsbereich auszusortieren oder es zu kennzeichnen, vorzugsweise durch eine an die Datenschnittstelle angeschlossene Kennzeichnungsvorrichtung, insbesondere eine Farbmarkierungsvorrichtung. Durch diese Fortbildung wird es grundsätzlich ermöglicht, die erfindungsgemäße Tierortungsvorrichtung mit Einrichtungen, die Innerhalb des Tieraufenthaltsbereichs angeordnet sind oder mit diesen zusammenwirken, signaltechnisch zu koppeln und auf diese Weise diese Einrichtungen aus der Tierortungsvorrichtung anzusteuern. Bei dieser Fortbildung übernimmt die Tierortungsvorrichtung nicht lediglich Aufgaben im Bereich der Tierüberwachung, -analyse und der Anzeige von im Rahmen dieser Überwachung und Analyse aufgefundenen Tierverhaltensmuster, sondern ist darüber hinaus befähigt, in Abhängigkeit dieser Verhaltensmuster bestimmte Tiere einer Sortervorrichtung zuzuführen, um sie auf diesem Weg beispielsweise in einen getrennten Bereich von den übrigen Tieren zuzuführen oder um sie einem Fütterungsbereich mit spezifischem Sonderfutter zuzuführen oder dgl.

Ein weiterer Aspekt der Erfindung ist ein Verfahren zum Identifizieren von Tieren nach Anspruch 11.

Mit dem erfindungsgemäßen Verfahren wird eine einfache Ortung eines einzelnen Tieres aus einer Mehrzahl von Tieren, die sich gemeinsam und untereinander frei beweglich in einem gemeinsamen Tieraufenthaltsbereich aufhalten, ermöglicht. Insbesondere kann mit dem erfindungsgemäßen Verfahren ein einzelnes Tier gezielt aus der Mehrzahl von Tieren herausgefunden werden, ohne dass es hierfür erforderlich wäre, mehrere der Tiere nach einem "Trial and Error"-Prinzip zu erfassen, um zu überprüfen, ob diese Tiere dem gesuchten tierindividuellen Merkmal entsprechen.

Ein weiterer Aspekt der Erfindung ist ein Verfahren zum Steuern eines Stallklimas, mit den Schritten: Bildliches Erfassen einer Mehrzahl von Tieren in Zeitabständen innerhalb eines Tieraufenthaltsbereichs mittels einer Bilderfassungsvorrichtung, Verfolgen des so erfassten, vorzugsweise einer Mehrzahl von so erfassten Tieren in aufeinanderfolgenden Bilderfassungen der Bilderfassungseinrichtung und solcherart Ermitteln von deren Aufenthaltsort, Anzeigen des Aufenthaltsort eines oder mehrerer identifizierter Tiere an einen Benutzer, Analysieren des tierindividuellen Verhaltensmusters und Abgleich mit vorbestimmten abgespeicherten Verhaltensmustern, Ausgeben eines Klimasteuerungssignals an eine Klimaeinrichtung für den Tieraufenthaltsbereich, wobei die Größe des Klimasteuerungssignals in Abhängigkeit des durch den Abgleich ermittelten Verhaltensmusters steht.

Diese Verfahren können insbesondere mit der zuvor erläuterten Tierortungsvorrichtung oder Teilen davon ausgeführt werden. Weiterhin ist zu verstehen, dass das erfindungsgemäße Verfahren insbesondere solcherart bevorzugt fortgebildet werden kann, dass es diejenigen Verfahrensschritte aufweist bzw. ermöglicht, die durch die zuvor erläuterten Fortbildungen der erfindungsgemäßen Tierortungsvorrichtung bereitgestellt werden.

Eine bevorzugte Ausführungsform wird anhand der anhängenden Figuren beschrieben. Es zeigen:
- Fig. 1: eine schematische Seitenansicht einer in einem Stallbereich installierten erfindungsgemäßen Tierortungsvorrichtung,
- Fig. 2A-E: aufeinander folgende Bildsequenzen einer Bilderfassungseinrichtung der erfindungsgemäßen Tierortungsvorrichtung.

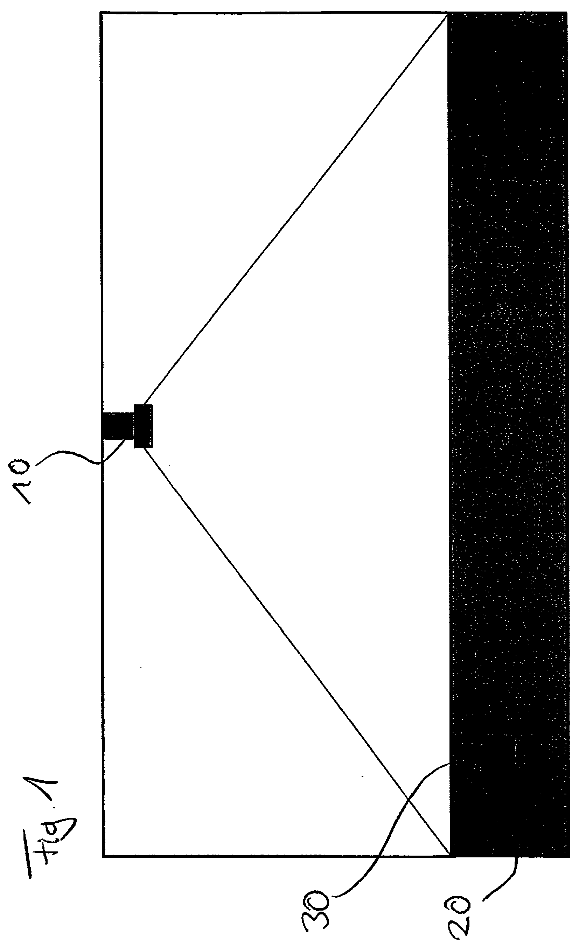

Wie in Fig. 1 zu erkennen, umfasst die erfindungsgemäße Tierortungsvorrichtung eine Bilderfassungseinrichtung 10, die als Videokamera ausgebildet ist und die oberhalb eines Tieraufenthaltsbereichs 20 angeordnet ist. Die Videokamera 10 hat eine senkrecht nach unten ausgerichtete Bildaufnahmerichtung und einen Bildwinkel, der den gesamten Tieraufenthaltsbereich einschließt. Der Tieraufenthaltsbereich ist im gezeigten Beispiel eine Schweinebucht, es ist jedoch zu verstehen, dass der Tieraufenthaltsbereich auch durch zwei oder mehrere nebeneinander angeordnete Schweinebuchten ausgestaltet sein kann. Insbesondere kann die Videokamera 10 genau oberhalb einer Trennwand zwischen zwei separaten Tieraufenthaltsbereichen angeordnet sein und beide Tieraufenthaltsbereiche mit ihrem Bildwinkel erfassen, so dass eine Verfolgung und Ortung von Tieren in beiden Schweinebuchten ermöglicht wird.

Im Tieraufenthaltsbereich ist an einer Seitenwand eine Merkmalserfassungsvorrichtung 30 angeordnet, die als Lesegerät für einen an jedem Tier befindlichen Transponder ausgebildet Ist. Der Transponder jedes Tieres gibt an die Lesevorrichtung ein tierindividuelles Merkmal in Form eines individuellen Codes aus, wenn sich das Tier im unmittelbaren Bereich der Lesevorrichtung 30 befindet.

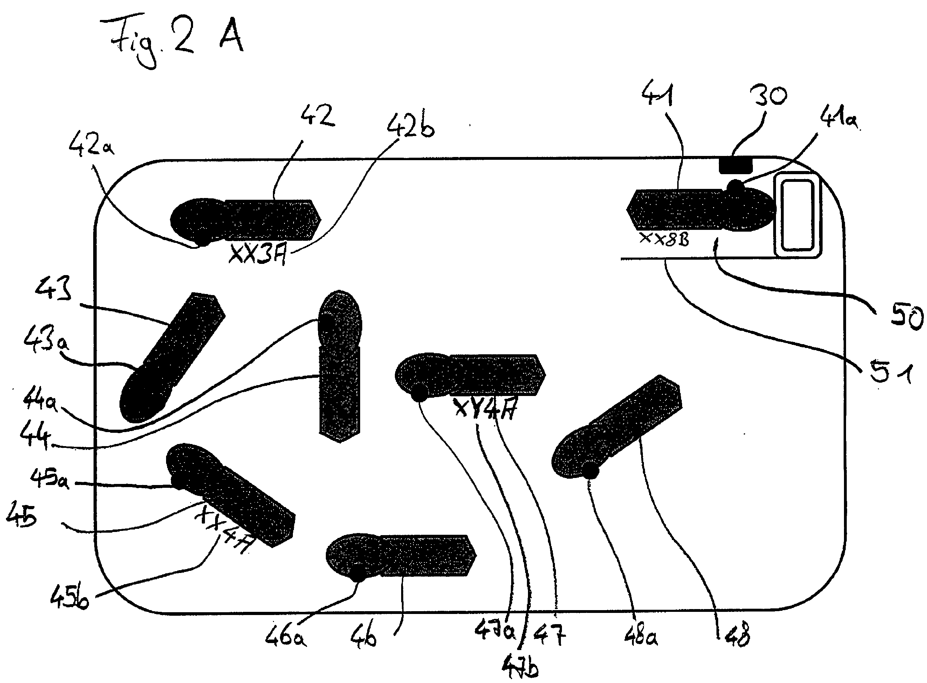

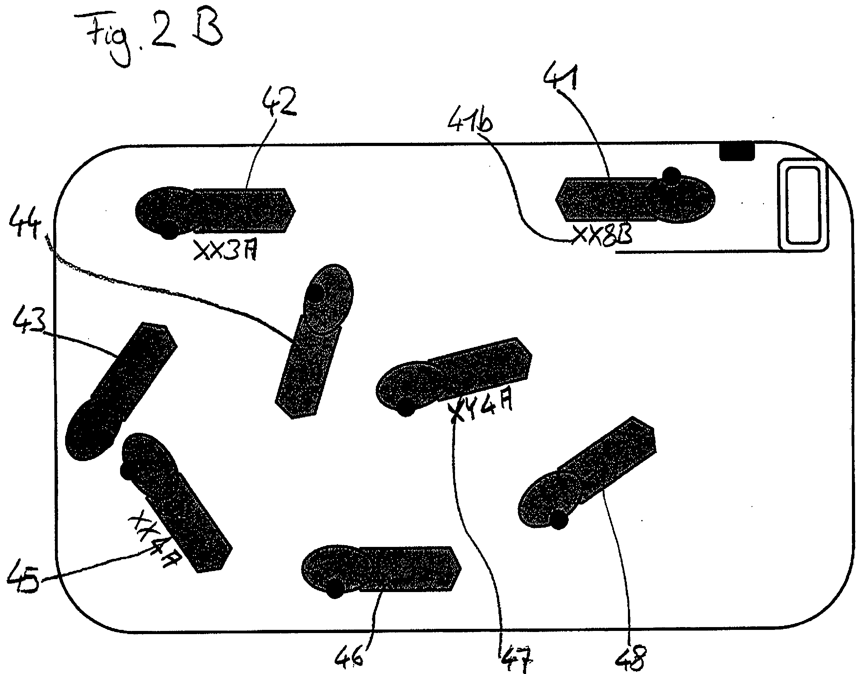

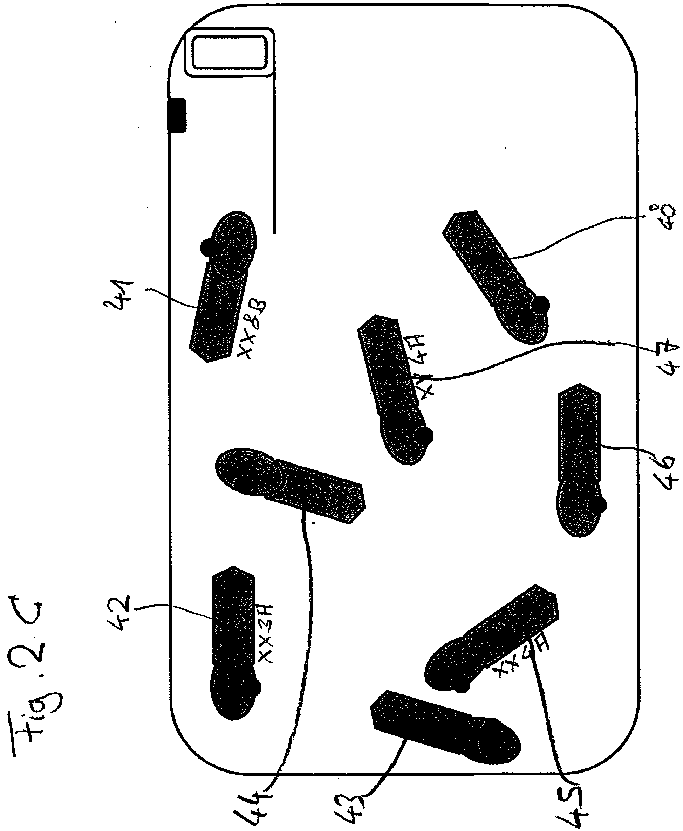

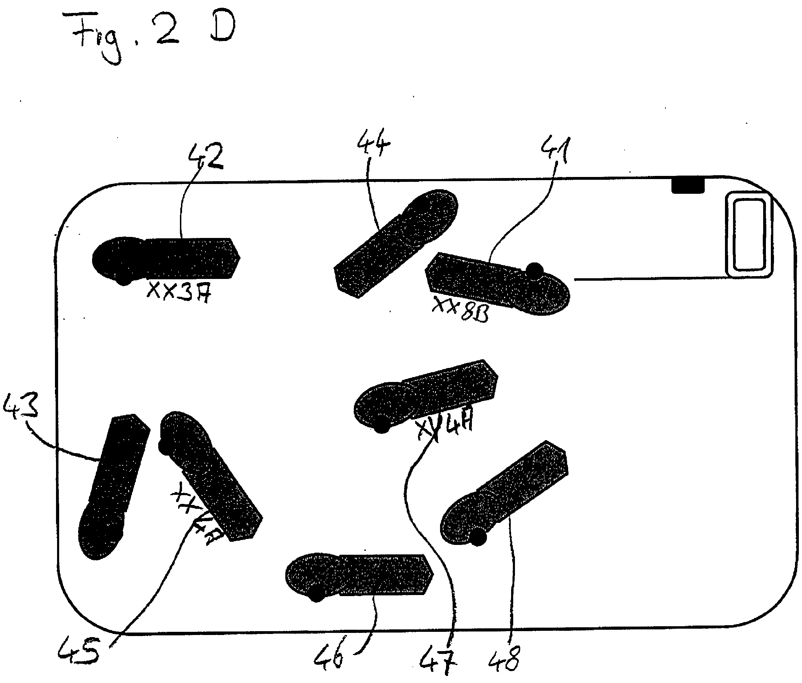

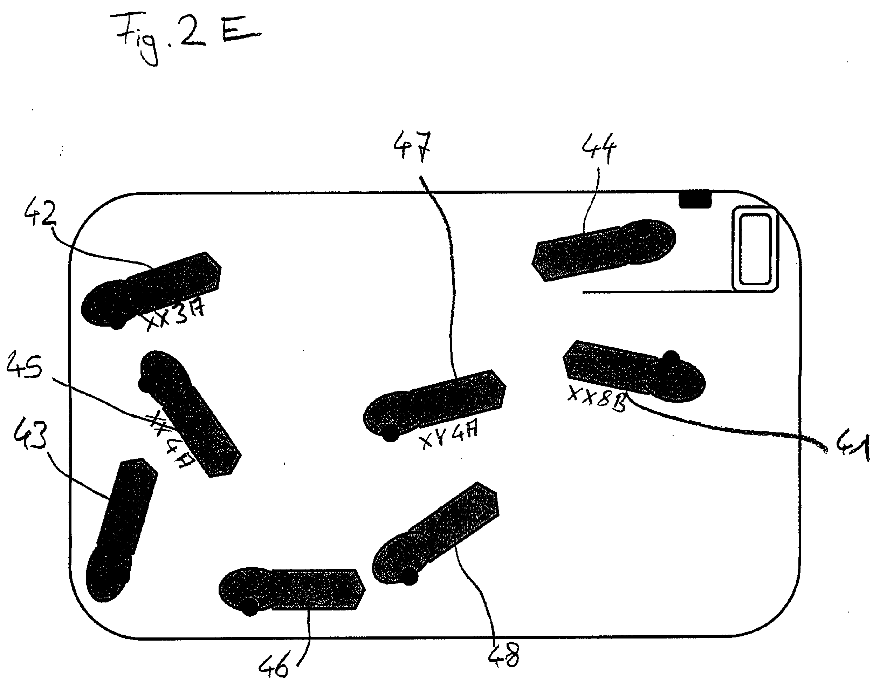

Fig. 2A zeigt eine erste Aufnahme einer Bilderfassungseinrichtung des von der Videokamera 10 überwachten Tieraufenthaltsbereichs. Die Abbildung gemäß Fig. 2A entspricht derjenigen Darstellung, die sich einem Benutzer auf einer als Bildschirm ausgebildeten Anzeigeeinrichtung darstellt, wenn er ein einzelnes Tier aus der Mehrzahl von Tieren finden möchte. Wie man erkennen kann, werden die von der Bilderfassungseinrichtung erfassten Bilddaten von einer Datenverarbeitungseinrichtung (nicht abgebildet) solcherart aufbereitet, dass jedes der Tiere als Umriss erfasst wird und auch als solcher Umriss, der die Ausrichtung des Tieres erkennen lässt, an den Benutzer ausgegeben wird. Jedes der Tiere 41-48 weist einen am Ohr befestigten Transponder auf, der dem Lesegerät 30 ein tierindividuelles Merkmal ausgeben kann.

Wie zu erkennen ist, befindet sich ein Tier 41 im Bereich eines Fressstandes 50, und da das Lesegerät 30 im Bereich des Fressstandes 50 angeordnet ist, kann von diesem Tier das tierindividuelle Merkmal vom Lesegerät 30 erfasst werden. Da sich aufgrund der Trennwand 51 nur jeweils genau ein Tier im Bereich des Fressstandes 50 aufhalten kann, kann das von der Lesevorrichtung 30 erfasste tierindividuelle Merkmal durch die Datenverarbeitungseinrichtung unmittelbar und eindeutig dem durch den Umriss erfassten Tier 41 zugeordnet werden.

Wie den nachfolgenden Bildsequenzen 2B-E zu entnehmen ist, werden die einzelnen Bilderfassungen der Bilderfassungseinrichtung in solchen Zeitabständen ausgeführt, dass sich die Tiere, wenn sie sich zwischen den beiden Bilderfassungen mit ihrer üblichen Geschwindigkeit bewegen, nur so weit von ihrem vorhergehenden Aufenthaltsort wegbewegt haben, dass sich der Umriss des Tieres in der vorhergehenden Aufnahme zu einem überwiegenden Teil mit dem Umriss des Tieres in der nachfolgenden Aufnahme überschneidet. Solche sich in zwei zeitlich aufeinander folgenden Bilderfassungen zu einem Großteil überschneidende Umrisse werden durch die Datenverarbeitungseinrichtung einem einzelnen Tier zugeordnet, das auf diese Weise verfolgt wird. Das dem Umriss der vorhergehenden Aufnahme zugeordnete tierindividuelle Merkmal wird dann auch dem Umriss der nachfolgenden Aufnahme zugeordnet. Auf diese Weise kann das tierindividuelle Merkmal dem Tier weiterhin zugeordnet bleiben, auch wenn es sich aus dem Bereich der Lesevorrichtung 30 entfernt, wie man anhand des Tieres 41 in den Aufnahmen 2A-E erkennen kann.

In dem dargestellten Ausführungsbeispiel sind die Tiere 42, 45 und 47 bereits zuvor im Fressstand gewesen und wurden folglich von der Lesevorrichtung hinsichtlich ihres tierindividuellen Merkmals erfasst, so dass diesen Tieren das Jeweilige tierindividuelle Merkmal zugeordnet und auf der Anzeigevorrichtung durch einen entsprechenden Buchstabencode 42b, 45b, 47b angezeigt wird. Die übrigen Tiere 43, 44, 46, 48 waren noch nicht im Fressstand und sind folglich noch nicht hinsichtlich ihres tierindividuellen Merkmals erfasst.

Weiterhin kann man erkennen, dass sich die Tiere 43 und 45 auffällig verhalten, da sie in aufeinander folgenden Bildfolgen eng beisammen stehen. Dies lässt auf die Möglichkeit der gegenseitigen Verletzung dieser Tiere Rückschlüsse zu und die Tiere sind daher als verhaltensauffällig von der Datenverarbeitungseinrichtung klassifiziert worden und werden durch eine rote Farbhinterlegung In der Anzeigevorrichtung dargestellt.

Ein Benutzer der Vorrichtung kann daher mit einer mobilen Anzeigevorrichtung an die Schweinebucht herantreten und auf den ersten Blick ein bestimmtes, individuelles Tier bezüglich seines Aufenthaltsortes erkennen, wenn dieses zuvor identifiziert und weiterverfolgt wurde. Weiterhin kann ein Benutzer auf Anhieb verhaltensauffällige Tiere hinsichtlich ihres Aufenthaltsorts erkennen und überprüfen, ob tatsächlich eine Verhaltensauffälligkeit oder entsprechend hieraus resultierende Verletzungen vorliegen.

## Patentansprüche

1. Tierortungsvorrichtung, insbesondere zur Ortung von Nutztieren, umfassend:
- eine Merkmalserfassungsvorrichtung (30) zum Erfassen eines tierindividuellen Merkmals,
- eine Bilderfassungseinrichtung (10), welche ausgebildet ist, um innerhalb eines Tieraufenthaltsbereichs eine Mehrzahl von Tieren in Zeitabständen zu erfassen,
- eine Datenverarbeitungseinrichtung, welche mit der Merkmalserfassungsvorrichtung und der Bilderfassungsvorrichtung signaltechnisch verbunden ist und ausgebildet ist,
o um ein von der Merkmalserfassungsvorrichtung erfasstes tierindividuelles Merkmal (42b; 45b; 47b) einem von der Bilderfassungseinrichtung erfassten Tier (42;45;47), welches sich im Bereich der Merkmalserfassungsvorrichtung befindet, zuzuordnen und das Tier so zu identifizieren, und
o um das identifizierte, vorzugsweise eine Mehrzahl von identifizierten Tieren in aufeinanderfolgenden Bilderfassungen der Bilderfassungseinrichtung zu verfolgen und so deren Aufenthaltsort zu ermitteln,
- eine Anzeigevorrichtung, welche ausgebildet ist, um einem Benutzer den Aufenthaltsort eines oder mehrerer identifizierter Tiere anzuzeigen,
**dadurch gekennzeichnet, dass** die Datenverarbeitungseinrichtung ausgebildet ist, um ein, zwei oder mehrere Körpermerkmale eines Tieres zu erfassen, umfassend:
- ein Länge-Breite-Verhältnis eines Tieres,
- eine Größe eines Tieres,
- eine Farbe eines Tieres,
- eine Temperatur eines Tieres, und/oder
- eine Farbe eines Tieres,
und ein Tier anhand von diesen Körpermerkmalen zu verfolgen und gegebenenfalls nach einer fehlgeschlagenen Verfolgung zwischen zwei aufeinanderfolgenden Bilderfassungen wiederaufzufinden.

2. Tierortungsvorrichtung nach Anspruch 1,
**dadurch gekennzeichnet, dass** die Bilderfassungseinrichtung (10) eine Videokamera ist und die Datenverarbeitungseinrichtung solcherart ausgebildet ist, dass die Videokamera in regelmäßigen Zeitabständen für eine Bilderfassung des Tieraufenthaltsbereichs angesteuert wird, insbesondere in Zeitabständen, die abhängig von der Bewegungsgeschwindigkeit der zu identifizierenden Nutztiere solcherart gewählt sind, dass die erfassten Bilder eines sich schnell bewegenden Nutztieres in zwei aufeinanderfolgenden Bilderfassungen aufgrund ihrer eng benachbarten Lage zueinander ein und demselben Nutztier zugeordnet werden können.

3. Tierortungsvorrichtung nach Anspruch 1 oder 2,
**dadurch gekennzeichnet, dass** das tierindividuelle Merkmal eine am Tier befestigte Kodierung, insbesondere ein RFID-Tag (41a; 42a; 45a), ist und die Merkmalserfassungsvorrichtung ein Lesegerät zum Auslesen der am Tier befestigten Kodierung ist.

4. Tierortungsvorrichtung nach einem der vorhergehenden Ansprüche,
**dadurch gekennzeichnet, dass** die Bilderfassungsvorrichtung oberhalb des Tieraufenthaltsbereichs angeordnet ist und für eine nach unten gerichtete Bilderfassungsrichtung ausgerichtet ist und/ oder dass die Merkmalserfassungsvorrichtung im Tieraufenthaltsbereich angeordnet ist, vorzugsweise innerhalb eines Futterstandes im Tieraufenthaltsbereich.

5. Tierortungsvorrichtung nach einem der vorhergehenden Ansprüche,
**dadurch gekennzeichnet, dass** die Datenverarbeitungseinrichtung ausgebildet ist, um den Umriss eines von der Bilderfassungseinrichtung erfassten Tieres zu bestimmen, in aufeinanderfolgenden Bilderfassungen zu verfolgen und einem tierindividuellen Merkmal zuzuordnen.

6. Tierortungsvorrichtung nach einem der vorhergehenden Ansprüche,
**dadurch gekennzeichnet, dass**
- die Datenverarbeitungseinrichtung ausgebildet ist, um anhand der Verfolgung der Umrisse eines oder mehrerer Tiere einem oder entsprechend mehreren Tieren tierindividuelle Verhaltensmuster zuzuordnen, insbesondere einen Fressvorgang eines Tieres, Kannibalismus unter den Tieren oder ein krankheitstypisches Verhalten und dass weiter vorzugsweise
- die Anzeigevorrichtung ausgebildet ist, um die Tiere als Symbole innerhalb eines symbolisierten Tieraufenthaltsbereichs anzuzeigen und das oder die Symbol(e) derjenigen Tiere, denen ein bestimmtes tierindividuelles Verhaltensmuster zugeordnet wurde, zu markieren und/oder
- dass die Anzeigevorrichtung ein Bildschirm ist, auf dem die Tiere durch Symbole innerhalb eines symbolisierten Tieraufenthaltsbereichs angezeigt werden und beim oder im Symbol eines Tier, vorzugsweise bei oder in den Symbolen von zwei und insbesondere allen Tieren innerhalb des Tieraufenthaltsbereichs das tierindividuelle Merkmal des jeweiligen Tieres angezeigt wird.

7. Tierortungsvorrichtung nach einem der beiden vorhergehenden Ansprüche,
**gekennzeichnet durch** eine Datenschnittstelle, und **dadurch** dass die Datenverarbeitungseinrichtung ausgebildet ist, um über die Datenschnittstelle ein Signal an eine Sortervorrichtung auszugeben, welches dazu dient, ein Tier, welches sich im Bereich der Sortereinrichtung befindet und dem zuvor ein bestimmtes tierindividuelles Verhaltensmuster zugeordnet wurde, aus dem Tieraufenthaltsbereich auszusortieren oder es zu kennzeichnen vorzugsweise **durch** eine an die Datenschnittstelle angeschlossene Kennzeichnungsvorrichtung, insbesondere eine Farbmarkierungsvorrichtung.

8. Tierortungsvorrichtung nach einem der vorhergehenden Ansprüche, umfassend:
- eine Bilderfassungseinrichtung, welche ausgebildet ist, um innerhalb eines Tieraufenthaltsbereichs eine Mehrzahl von Tieren in Zeitabständen zu erfassen,
- eine Datenverarbeitungseinrichtung, welche mit der Bilderfassungsvorrichtung signaltechnisch verbunden ist und ausgebildet ist,
∘ um das identifizierte, vorzugsweise eine Mehrzahl von identifizierten Tieren in aufeinanderfolgenden Bilderfassungen der Bilderfassungseinrichtung zu verfolgen und so deren Aufenthaltsort zu ermitteln,
**gekennzeichnet durch** eine Datenschnittstelle, und **dadurch** dass die Datenverarbeitungseinrichtung ausgebildet ist, um über die Datenschnittstelle ein Klimasteuerungssignal an eine Klimaeinrichtung für den Tieraufenthaltsbereich auszugeben, wobei das Klimasteuerungssignal in Abhängigkeit bestimmter tierindividueller Verhaltensmuster ausgegeben wird.

9. Tierortungsvorrichtung nach einem der vorhergehenden Ansprüche,
**gekennzeichnet durch** eine Eingabevorrichtung zur Eingabe eines tierindividuellen Merkmals, insbesondere einer tierindividuellen Kodierung und weiterhin **dadurch** gekennzeichnet, dass die Anzeigevorrichtung ausgebildet ist, um die Tiere als Symbole innerhalb eines symbolisierten Tieraufenthaltsbereichs anzuzeigen und das Symbol desjenigen Tieres, welches einem eingegebenen tierindividuellen Merkmal zugeordnet ist, zu markieren und/oder
dass die Datenverarbeitungsvorrichtung ausgebildet ist, um anhand der Bilderfassungsvorrichtung erfasste Tierbehandlungsvorgänge innerhalb des Tieraufenthaltsbereichs zu erfassen und dem jeweils behandelten Tier zuzuordnen.

10. Tierortungsvorrichtung nach einem der vorhergehenden Ansprüche,
**gekennzeichnet durch** eine manuelle Markierungsvorrichtung, welche von einem Benutzer der Tierortungsvorrichtung im Bereich eines Tieres, insbesondere oberhalb eines Tieres ausgelöst werden kann und die bei Auslösung ein von der Bilderfassungseinrichtung identifizierbares Signal aussendet welches von der Datenverarbeitungseinrichtung dem jeweiligen Tier zugeordnet werden kann.

11. Verfahren zum Orten von Tieren, insbesondere Nutztieren, mit den Schritten:
- Erfassen eines tierindividuellen Merkmals (42b; 45b; 47b) mittels einer Merkmalserfassungsvorrichtung (30),
- Bildliches Erfassen einer Mehrzahl von Tieren (42; 45; 47) in Zeitabständen innerhalb eines Tieraufenthaltsbereichs mittels einer Bilderfassungsvorrichtung (10), die vorzugsweise mit einem von der Merkmalserfassungsvorrichtung verschiedenen Erfassungsverfahren arbeitet und weiter vorzugsweise von der Merkmalserfassungsvorrichtung beabstandet ist,
- Zuordnen eines von der Merkmalserfassungsvorrichtung erfassten tierindividuellen Merkmals zu einem von der Bilderfassungseinrichtung erfassten Tier, welches sich im Bereich der Merkmalserfassungsvorrichtung befindet, und solcherart Identifizieren des Tieres, und
- Verfolgen des so identifizierten, vorzugsweise einer Mehrzahl von so identifizierten Tieren in aufeinanderfolgenden Bilderfassungen der Bilderfassungseinrichtung und solcherart Ermitteln von deren Aufenthaltsort,
- Anzeigen des Aufenthaltsort eines oder mehrerer identifizierter Tiere an einen Benutzer.
wobei das Verfolgen des Tieres anhand von einem, zwei oder mehreren Körpermerkmalen erfolgt, umfassend:
- ein Länge-Breite-Verhältnis eines Tieres,
- eine Größe eines Tieres,
- eine Farbe eines Tieres,
- eine Temperatur eines Tieres, und/oder
- eine Farbe eines Tieres,
und ein Tier anhand von diesem/n Körpermerkmal(en) verfolgt wird und gegebenenfalls Wiederauffinden des Tieres nach einer fehlgeschlagenen Verfolgung zwischen zwei aufeinander folgenden Bilderfassungen.

## Claims

1. Device for locating animals, in particular for locating farm animals, comprising:
- a characteristic detection device (30) for detecting a characteristic individual to an animal,
- an image detection device (10) configured to detect a plurality of animals within an animal holding area at time intervals,
- a data processing device which is connected to the characteristic detection device and to the image detection device by signal communication and configured
∘ to correlate a characteristic (42b; 45b; 47b) individual to an animal detected by the characteristic detection device with an animal (42; 45; 47) located in the region of the characteristic detection device detected by the image detection device and thus identify the animal, and
∘ to track the identified animal, preferably a plurality of identified animals, in successive image detection operations of the image detection device and thus determine their location,
- a display device configured to display to a user the location of one or more identified animals,
**characterised in that** the data processing device is configured to detect one, two or more body characteristics of an animal, comprising
- a length-width ratio of an animal,
- a size of an animal,
- a colour of an animal,
- a temperature of an animal, and/or
- a colour of an animal,
and to track an animal on the basis of these body characteristics and in the event of a tracking failure between two successive image detection operations to find it again if necessary.

2. Animal locating device as claimed in claim 1,
**characterised in that** the image detection device (10) is a video camera and the data processing device is configured so that the video camera is activated at regular intervals for detecting images of the animal holding area, in particular at time intervals which are selected as a function of the speed of movement of the farm animals to be identified so that the detected images of a rapidly moving animal in two successive image detection operations can be correlated with one and the same farm animal due to their closely adjacent position.

3. Animal locating device as claimed in claim 1 or 2,
**characterised in that** the characteristic individual to the animal is a code, in particular an RFID tag (41a; 42a; 45a) attached to the animal and the characteristic detection device is a reading device for reading the code attached to the animal.

4. Animal locating device as claimed in one of the preceding claims,
**characterised in that** the image detection device is disposed above the animal holding area and is oriented so as to detect images in a downwardly oriented direction and/or the characteristic detection device is disposed in the animal holding area, preferably inside a feed trough in the animal holding area.

5. Animal locating device as claimed in one of the preceding claims,
**characterised in that** the data processing device is configured to determine the contour of an animal detected by the image detection device, track it in successive image detection operations and correlate with it a characteristic individual to the animal.

6. Animal locating device as claimed in one of the preceding claims,
**characterised in that**
- the data processing device is configured to use the system of tracking the contours of one or more animals to correlate behaviour patterns individual to the animal with one or accordingly more animals, in particular a feeding session of an animal, cannibalism amongst the animals or a behaviour indicative of illness and preferably also
- the display device is configured to display the animals as symbols within a symbolised animal holding area and to mark the symbol (s) of those animals that have been correlated with a specific behaviour pattern individual to the animal and/or
- the display device is a screen on which the animals are displayed by symbols within a symbolised animal holding area and the characteristic individual to the animal of the respective animal is displayed with or in the symbol of the animal, preferably with or in the symbols of two and in particular all of the animals within the animal holding area.

7. Animal locating device as claimed in one of the two preceding claims,
**characterised by** a data interface and **characterised in that** the data processing device is configured to emit a signal via the data interface to a sorting device which is used to pick out of the animal holding area or identify an animal that is located in the area of the sorting device and has previously been correlated with a specific behaviour pattern individual to the animal, preferably by means of an identification device connected to the data interface, in particular a colour marking device.

8. Animal locating device as claimed in one of the preceding claims, comprising:
- an image detection device configured to detect a plurality of animals within an animal holding area at time intervals,
- a data processing device connected to the image detection device by signal communication and configured
∘ to track the identified animal, preferably a plurality of identified animals, in successive image detection operations of the image detection device and thus determine their location,
**characterised by** a data interface and **characterised in that** the data processing device is configured to emit an air conditioning control signal via the data interface to an air conditioning system for the animal holding area, and the air conditioning control signal is emitted as a function of specific behaviour patterns individual to the animals.

9. Animal locating device as claimed in one of the preceding claims,
**characterised by** an input device for entering a characteristic individual to an animal, in particular a code individual to an animal, and further **characterised in that** the display device is configured to display the animals as symbols within a symbolised animal holding area and to mark the symbol of those animals correlated with an entered characteristic individual to the animal, and/or
the data processing device is configured to detect animal treatment procedures within the animal holding area detected by the image detection device and correlate them with the respective animal treated.

10. Animal locating device as claimed in one of the preceding claims,
**characterised by** a manual marking device which can be triggered by a user of the animal locating device in the region of an animal, in particular above an animal, and which, when triggered, emits a signal identifiable by the image detection device which can be correlated with the respective animal by the data processing device.

11. Method of locating animals, in particular farm animals, comprising the steps:
- detecting a characteristic (42b; 45b; 47b) individual to an animal by means of a characteristic detection device (30),
- detecting a plurality of animals (42; 45; 47) on the basis of images at time intervals within an animal holding area by means of an image detection device (10) which preferably operates by a detection method that is different from that of the characteristic detection device and is further preferably spaced at a distance apart from the characteristic detection device,
- correlating a characteristic individual to an animal detected by the characteristic detection device with an animal located in the region of the characteristic detection device detected by the image detection device and thus identifying the animal in this manner, and
- tracking the animal thus identified, preferably a plurality of animals thus identified, in successive image detection operations of the image detection device and determining their location in this manner,
- displaying the location of one or more identified animals to a user,
and the animal is tracked on the basis of one, two or more body characteristics, comprising:
- a length-width ratio of an animal,
- a size of an animal,
- a colour of an animal,
- a temperature of an animal, and/or
- a colour of an animal,
and an animal is tracked on the basis of this/these body characteristic (s) and in the event of a tracking failure between two successive image detection operations the animal is found again if necessary.

## Revendications

1. Dispositif de localisation d'animaux, en particulier servant à la localisation d'animaux de rente, comprenant :
- un dispositif de détection de caractéristique (30) servant à détecter une caractéristique propre à l'animal,
- un système de détection par images (10) qui est réalisé afin de détecter, dans une zone de séjour des animaux, une pluralité d'animaux à des intervalles de temps donnés,
- un système de traitement de données, qui est relié au dispositif de détection de caractéristique et au système de détection par images selon une technique de signaux et qui est réalisé
- - afin d'associer une caractéristique (42b ; 45b ; 47b) propre à l'animal détectée par le dispositif de détection de caractéristique à un animal (42 ; 45 ; 47) détecté par le système de détection par images, lequel animal se trouve dans la zone du dispositif de détection de caractéristique, et afin d'identifier ainsi l'animal, et
- - afin de suivre l'animal identifié, de préférence une pluralité d'animaux identifiés, dans des images prises successivement du système de détection par images et de déterminer ainsi leur emplacement,
- un dispositif d'affichage qui est réalisé afin d'indiquer à un utilisateur l'emplacement d'un ou de plusieurs animaux identifiés,
**caractérisé en ce que** le système de traitement des données est réalisé afin de détecter une, deux ou plusieurs caractéristiques corporelles d'un animal, comprenant :
- un rapport longueur-largeur d'un animal,
- une taille d'un animal,
- une couleur d'un animal,
- une température d'un animal, et/ou
- une couleur d'un animal,
et afin de suivre un animal à l'aide desdites caractéristiques corporelles et, éventuellement, de le retrouver, suite à un suivi ayant échoué entre deux images prises successivement.

2. Dispositif de localisation d'animaux selon la revendication 1,
**caractérisé en ce que** le système de détection par images (10) est une caméra vidéo, et **en ce que** le système de traitement de données est réalisé de telle manière que la caméra vidéo est commandée à des intervalles de temps réguliers en vue d'images prises de la zone de l'emplacement des animaux, en particulier à des intervalles de temps qui sont choisis en fonction de la vitesse de déplacement des animaux de rente à identifier de telle manière que les images prises d'un animal se déplaçant à grande vitesse peuvent être associées, dans deux images prises successivement, du fait de leur position étroitement voisine, à un seul et même animal.

3. Dispositif de localisation d'animaux selon la revendication 1 ou 2,
**caractérisé en ce que** la caractéristique propre à l'animal est un codage fixé au niveau de l'animal, en particulier une étiquette RFID (41a ; 42a; 45a), et **en ce que** le dispositif de détection de caractéristique est un appareil de lecture servant à lire le codage fixé au niveau de l'animal.

4. Dispositif de localisation d'animaux selon l'une quelconque des revendications précédentes,
**caractérisé en ce que** le dispositif de détection par images est disposé au-dessus de la zone de l'emplacement des animaux et est orienté pour une direction de prise d'images orientée vers le bas, et/ou **en ce que** le dispositif de détection de caractéristique est disposé dans la zone d'emplacement des animaux, de préférence dans une mangeoire dans la zone d'emplacement des animaux.

5. Dispositif de localisation d'animaux selon l'une quelconque des revendications précédentes,
**caractérisé en ce que** le système de traitement des données est réalisé afin de déterminer la silhouette d'un animal détecté par le système de détection par images, de le suivre dans des images prises successivement et de l'associer à une caractéristique propre à l'animal.

6. Dispositif de localisation d'animaux selon l'une quelconque des revendications précédentes,
**caractérisé en ce**
- **que** le système de traitement des données est réalisé afin d'associer, à l'aide du suivi des silhouettes d'un ou de plusieurs animaux, des types de comportement propres aux animaux à un ou, de manière correspondante, à plusieurs animaux, en particulier une action d'alimentation d'un animal, le cannibalisme parmi les animaux ou un comportement typique d'une maladie, et en ce que de préférence
- le dispositif d'affichage est réalisé afin d'indiquer les animaux sous la forme de symboles dans une zone d'emplacement des animaux représentée par des symboles et de marquer le ou les symboles des animaux, auxquels précisément un type de comportement propre aux animaux défini a été associé, et/ou
- en ce que le dispositif d'affichage est un écran, sur lequel les animaux sont indiqués par des symboles dans la zone d'emplacement des animaux représentée par des symboles et sur lequel la caractéristique propre à l'animal de l'animal respectif est indiquée pour ou dans le symbole d'un animal, de préférence pour ou dans les symboles de deux et, en particulier, de tous les animaux dans la zone d'emplacement des animaux.

7. Dispositif de localisation d'animaux selon l'une quelconque des deux revendications précédentes,
**caractérisé par** une interface de données, et en ce que le dispositif de traitement de données est réalisé afin d'émettre, par l'intermédiaire de l'interface de données, un signal à un dispositif de tri, qui sert à trier un animal, qui se trouve dans la zone du système de tri et auquel un type de comportement propre à l'animal défini a été associé au préalable, parmi la zone d'emplacement de l'animal ou à l'identifier, de préférence par un dispositif d'identification raccordé à l'interface de données, en particulier un dispositif de marquage par couleurs.

8. Dispositif de localisation d'animaux selon l'une quelconque des revendications précédentes, comprenant :
- un système de détection par images, qui est réalisé afin de détecter, dans une zone d'emplacement des animaux, une pluralité d'animaux à des intervalles de temps donnés,
- un système de traitement de données qui est relié selon une technique de signal au dispositif de détection par images et qui est réalisé
- - afin de suivre l'animal identifié, de préférence une pluralité d'animaux identifiés dans des images prises successivement, du système de détection par images et afin de déterminer ainsi leur emplacement,
**caractérisé par** une interface de données, et en ce que le système de traitement des données est réalisé afin d'émettre, par l'intermédiaire de l'interface de données, un signal de commande de climatisation à un système de climatisation pour la zone d'emplacement des animaux, le signal de commande de climatisation étant émis en fonction de types de comportement propres à l'animal définis.

9. Dispositif de localisation d'animaux selon l'une quelconque des revendications précédentes,
**caractérisé par** un dispositif d'entrée servant à entrer une caractéristique propre à l'animal, en particulier un codage propre à l'animal, et par ailleurs **caractérisé en ce que** le dispositif d'affichage est réalisé afin d'afficher sous la forme de symboles les animaux dans une zone d'emplacement des animaux représentée par un symbole, et de marquer le symbole de l'animal, qui précisément est à associer à une caractéristique entrée propre à l'animal, et/ou
**en ce que** le dispositif de traitement de données est réalisé afin de détecter dans la zone d'emplacement des animaux des opérations de traitement d'animaux détectées à l'aide du système de détection par images et de les associer à l'animal respectivement traité.

10. Dispositif de localisation d'animaux selon l'une quelconque des revendications précédentes,
**caractérisé par** un dispositif de marquage manuel, qui peut être déclenché par un utilisateur du dispositif de localisation d'animaux dans la zone d'un animal, en particulier au-dessus d'un animal, et qui envoie, lors du déclenchement, un signal pouvant être identifié par le système de détection par images, lequel signal peut être associé à l'animal respectif par le système de traitement de données.

11. Procédé servant à localiser des animaux, en particulier des animaux de rente, comprenant les étapes qui suivent :
- la détection d'une caractéristique (42b ; 45b ; 47b) propre à l'animal au moyen d'un dispositif de détection de caractéristique (30) ;
- la détection sous forme d'image d'une pluralité d'animaux (42 ; 45 ; 47) à des intervalles de temps donnés dans une zone d'emplacement d'animaux au moyen d'un système de détection par images (10), qui fonctionne de préférence avec un procédé de détection différent du dispositif de détection de caractéristique et qui est davantage tenu à distance de préférence du dispositif de détection de caractéristique ;
- l'association d'une caractéristique propre à l'animal détectée par le dispositif de détection de caractéristique à un animal détecté par le système de détection par images, lequel se trouve dans la zone du dispositif de détection de caractéristique et l'identification de cette manière de l'animal ; et
- le suivi de l'animal ainsi identifié, de préférence d'une pluralité d'animaux ainsi identifiés dans des images prises successivement du système de détection par images et la détermination de cette manière de leur emplacement ;
- l'indication de l'emplacement d'un animal ou de plusieurs animaux identifiés à un utilisateur,
le suivi de l'animal se faisant à l'aide d'une, de deux ou de plusieurs caractéristiques corporelles, comprenant :
- - un rapport longueur-largeur d'un animal,
- - une taille d'un animal,
- - une couleur d'un animal,
- - une température d'un animal, et/ou
- - une couleur d'un animal,
et un animal étant suivi à l'aide de la ou des caractéristiques corporelles ; et éventuellement l'action de retrouver l'animal après un suivi ayant échoué entre deux images prises successivement.
